# EUROPEAN PATENT APPLICATION

(11) **EP 1 351 447 A1**
(43) Date of publication of application: **08.10.2003**
(21) Application number: 02007765.7
(22) Date of filing: 05.04.2002
(51) Int. Cl.: H04L 12/28, H04N 7/24, H04L 29/08

(54) **Management and control of networked audio-video devices**

(71) Applicant: Sony International (Europe) GmbH, 10785 Berlin (DE)
(72) Inventor: Szucs, Paul, c/o Advanced Tech. Cent. Stuttgart, 70327 Stuttgart (DE); Tiedemann, Stephen, c/o Advanced Tech. Center, 70327 Stuttgart (DE); Mayer, Matthias, c/o Advanced Tech. Center, 70327 Stuttgart (DE); Terranova, Sabine, c/o Advanced Tech. Center, 70327 Stuttgart (DE)
(74) Representative: Müller - Hoffmann & Partner

(57) **Abstract**

To control networked devices via a message oriented middleware and a user interface, Agents are used which are generated on basis of a received user input via a user interface, each of which Agents encapsulates the realization of a certain well defined service corresponding to the user input by way of controlling respectively involved devices via the message oriented middleware.

## Description

The present invention relates to a method to control networked devices, e.g. for serving user requests, and, more particular, to a method to control networked devices via a message oriented middleware and a user interface, to a functionality module generator for generating functionality modules for controlling networked devices via a message oriented middleware and a user interface, such a functionality module itself, as well as a computer program product relating thereto.

Nowadays, a large variety of equipment and appliances employ man-machine-interface techniques, man-machine-dialogue systems, and/or the like, to ensure an easy and reliable use of the equipment and to increase the user's convenience, in particular in the field of network or home-network arrangements employing a variety of different devices connected thereto and offering a variety of possible services to the user.

The current vision of a Home Network (HN) is a network comprised of AV devices like TVs, tuners, VCRs and of IT devices like PCs, PDAs and mobile phones. To build up a network all these devices can be interconnected via various media, like i.LINK, Ethernet, wireless, etc.

So far, a lot of effort has been made to develop Home Network middlewares that implement the basic functions of Home Network device control and computing. Examples are AV/C, Jini, HAVi, OSGi or UPnP, wherein UPnP, AV/C, and HAVi provide a device-specific control, OSGi has no audio video (AV) included in the specification, and JINI does not define actual control methods in the specification.

On the application side, possible applications and User Interfaces have been developed only partly mainly for prototyping and demonstrator systems. But when a "realistic" application that integrates the complexity of the control of connected home devices on one hand and user friendliness and ease of use on the other hand still has to be developed.

Therefore, in prior art methods and systems for serving user requests and/or for operating man-machine-interface units, in particular in the field of home networks, direct and more or less precise commands are expected by a dialogue manager of said man-machine-interface unit to map the received command uttered by a user directly to an action of a certain device. In other words, in prior art methods and systems the user has to be aware of the devices and capabilities of the network and has to think in terms of concrete devices and actions for these devices.

Middleware provides APIs to access home network device's functionality and to control the exchange of contents data (e.g. content streaming). As mentioned above, these APIs are fine-grained and focused on devices.

It is an object of the present invention to provide an improved control of networked devices via a message oriented middleware and a user interface.

The object is achieved by a method to control networked devices via a message oriented middleware and a user interface according to the present invention as defined in independent claim 1, by a functionality module generator for generating functionality modules for controlling networked devices via a message oriented middleware and a user interface according to the present invention as defined in independent claim 7, and a functionality module according to the present invention as defined in independent claim 12. Preferred embodiments thereof are respectively defined in the respective following subclaims. A computer program product according to the present invention is defined in claim 15 and a computer readable storing medium according to the present invention is defined in claim 16.

The method to control networked devices via a message oriented middleware and a user interface according to the present invention uses instances of one or more functionality modules generated on the basis of a received user input via a user interface which functionality module encapsulates the realization of a certain well defined service corresponding to the user input by way of controlling respectively involved devices via the message oriented middleware.

It is not the object of the present invention to generate a sequence of actions corresponding to said certain well defined service, but to provide means of implementing such a generated sequence of actions. The generation of a sequence of actions corresponding to said certain well defined service is e.g. described in the applicants European Patent Application 01 128 163 "Method for serving User Requests with respect to a Network of Devices" which content is herewith incorporated into this specification by reference.

Preferably, the method according to the present invention additionally comprises the steps of
- generating said functionality module,
- starting and terminating the operation of the functionality module, and
- removing the instance of said functionality module.
   Alternatively or additionally, in the method according to present invention, said functionality module gets dynamically generated when the service is needed, when the user request is received, or between these times when enough resources to generate said functionality module are available.
   Further alternatively or additionally, in the method according to present invention, said functionality module gets generated independent of location.
   Still further alternatively or additionally, in the method according to the present invention, an application logic to control the networked devices by combined or parallel processing gets formed of a plurality of said functionality modules.
   Still further alternatively or additionally, in the method according to the present invention, said networked devices are audio-video devices.
   A functionality module generator for generating functionality modules for controlling networked devices via a message oriented middleware and a user interface according to the present invention comprises ,
- an interpretation unit deciding which networked devices have to be involved to realize a certain well defined service corresponding to a user input received via said user interface and which actions have to be performed by said devices, and to set a schedule for said actions, and
- an encapsulation unit to encapsulate said schedule for said actions in respect to said involved devices to realize of the certain well defined service corresponding to the user input into a functionality module body so that said actions will get initiated via said message oriented middleware.

Preferably, the functionality module generator according to the present invention additionally comprises an input interface receiving a list of parameters corresponding to said certain well defined service to supply these parameters to the interpretation unit. Alternatively or additionally, the functionality module generator according to the present invention might additionally comprise
- an output interface to supply said functionality module body including said encapsulated schedule for said actions to a control device responsible for said networked devices.

Further alternatively or additionally, the functionality module generator according to the present invention might additionally comprise
- an output interface to supply a link to said functionality module body including said encapsulated schedule for said actions to a control device responsible for said networked devices.

Further alternatively or additionally, the functionality module generator according to the present invention might generate functionality modules to control audio-video devices.

A functionality module for controlling networked devices via a message oriented middleware and a user interface according to the present invention comprises
- a functionality module body to encapsulate a schedule for actions capable to realize a certain well defined service corresponding to a user input received via said user interface and which actions have to be performed by said devices so that said actions are initiated via said message oriented middleware.

Preferably, in the functionality module according to the present invention said functionality module body comprises an functionality to remove the instance of said functionality module after said actions corresponding to said certain well defined service are initiated or performed.

Alternatively or additionally, the functionality module according to the present invention might control audio-video devices

A computer program product according to the present invention, comprises computer program means adapted to perform the method steps as indicated above, to embody the functionality module generator as indicated above, or to embody the functionality module as indicated above when being executed on a computer, digital signal processor or the like.

A computer readable record medium according to the present invention stores thereon a computer program product as set out above.

Generally, an application has a common programming interface to the functionality modules, which absorbs the details of the possibly several networks and device-control methods needed to perform operations. Thus, the functionality module architecture enables the hiding of specific kinds of networks and devices.

Further objects, features and advantages of the control of networked devices according to the present invention will become apparent from the following description of an exemplary embodiment thereof taken in conjunction with the accompanying drawings, wherein
- **Fig. 1**: shows a home network application user interface including EPG and record button,
- **Fig. 2**: shows a general life cycle of a functionality module,
- **Fig. 3**: shows a home network architecture, and
- **Fig. 4**: shows a life cycle of a live TV functionality module.

The following exemplary embodiment of the present invention describes an application of controlling networked audio video devices in the home. According to this embodiment of the invention an architecture based on autonomous (e.g. software) components is specified which enables the simple handling of management and control operations with audio video (and other) home network devices and content by (e. g. software) applications, which do not require specific knowledge about the actual network infrastructure or implemented control protocols.

According to the present invention the following disadvantages of existing network architectures, protocols and middleware when applied to management and control of networked audio video devices in the home are avoided:
- complex technical software interface (API), e.g. for AV/C or HAVi,
- architecture restricted to interaction with individual physical devices, e.g. with UPnP, AV/C, or HAVi,
- architecture or protocols restricted to particular networks, e.g. in case of HAVi which is restricted to IEEE1394.

Further, according to the present invention developers of (e.g. software) applications or services for AV devices in the home do not need any specific knowledge about device control protocols or the home network infrastructure at hand. As can be derived from the following description, these are abstracted from e.g. by the exemplary embodiment of the present invention, which provides an easily understandable and tangible software interface, mapping to the actual operations that a user commonly performs, e.g. "record the program 'news at ten' appearing on the station 'XYZ' at 22:00 this evening".

As stated before, the inventive solution for all these problems is the implementation and the use of so called functionality modules, which are - as the following exemplary embodiment relates to the management and control of networked audio video devices in the home - in the following also named 'Home Agents'.

Here, the Home Agents are independent software components that encapsulate the realization of a certain well-defined service and realize this service autonomously.

Setting up a Recording is such a complex service. The user would like to record a particular service event. The "Record Home Agent" has to locate a tuner that provides the desired service event, select the service, locate a suitable network recording device, set up a connection between both devices, start the recording on the disc and end the recording after the service event has stopped.

The realization of such a service contains the initialization of middleware API calls. These calls control HN devices and the interactions between them. By isolating the device specific middleware API calls in the implementation of Home Agents the application that uses Home Agents becomes independent from the device specific parts of the middleware, i.e. a device abstraction is achieved, which eases the integration of new devices or new control protocols.

Therewith, an end user application for the control of a home network is abstracted from the involved devices in terms of ease of use and ergonomics. In comparison, a straightforward implementation that directly uses the middleware device API would bloat in size and complexity and the resulting code will be difficult to manage.

An example that illustrates this problem is to record AV contents. This service seen from the device-control point of view comprises the following operations:
1. Schedule the recording and wait until the start time is reached.
2. Selection of a source device that provides the desired channel.
3. Selection of a channel to record.
4. Definition of the start and the end time of the recording.
5. Selection of a sink device.
6. Set up of the streaming connection between the source and the sink device.
7. Put sink device in record modus.
8. Supervision of the recording until the stop time is reached.
9. Put the sink device in stop modus.
10. Disconnect the devices.
11. Add a new entry in the video collection catalogue.

A simple service like "recording a certain channel from the start time to the end time" becomes a sequence of complex and technical operations that could not be mapped directly to the user interface. Instead, with the use of an appropriate home agent, there is a rather simple way to integrate this service into an EPG (electronic program guide) that provides a list of channels and events with their start and stop time by adding a simple "record" button. All operations of the list above get initiated when this button is pressed, but the user has not to care about these operations and the control of the involved devices via their APIs.

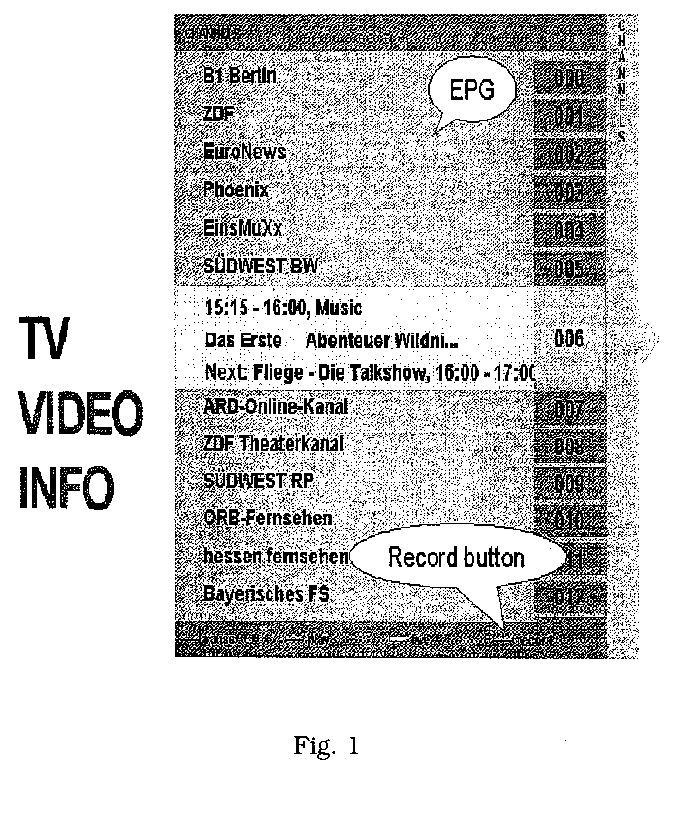

An example of a home network application user interface including EPG and record button is shown in Fig. 1, wherein on item, i.e. a certain audio video content, within an electronic program guide (EPG) is shown to be live. Upon operating a record button, this highlighted item will automatically be recorded with the help of a respective home agent, as will be elucidated in the following examples, without the need to control the involved devices separately via their APIs. In this example, alternatively items might be selected and the record button might be operated to record these selected items, i.e. it is also possible to generate home agents for future actions and not only for actions immediately to be performed.

An important characteristic of Home Agents is their individual lifetime. The lifetime of a Home Agent depends on its objective. E.g. a Recording Agent starts living when the user initiates the recording and terminates when the recording has been done.

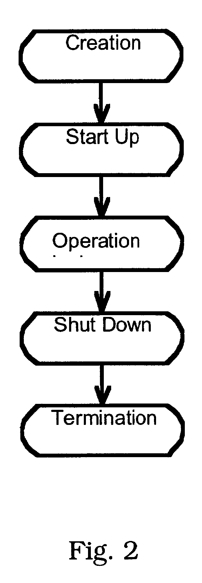

Fig. 2 illustrates the general Home Agent life cycle. The usual life cycle of a Home Agent is as following:
1. Creation of a Home Agent with service specific parameters.
2. Service-start up period including initiation of middleware and device specific operations.
3. Service operation.
4. Service-shut down period including initiation of middleware and device specific operations.
5. Termination of a Home Agent.

The advantage of such a life cycle is that system resource requirements (e.g. processing power or memory) could be distributed between separate agents over time.

The time when Home Agents are created is not fixed. They could be started separately at any time e.g. at runtime when its service is needed or in advance at application start up.

To start a Home Agent a specialized Home Agent named Home Agent Factory has to be used whose only responsibility is to launch other Home Agents. As a consequence Home Agents could be started dynamically whenever their service is desired.

Home Agents are loosely coupled by restricting the access to their services to messaging mechanisms. Thus, if such messaging mechanisms are available, it is possible to distribute Home Agents in the network, i.e. to generate the home agents location independent.

In contrast, Home Agents must be located on one network node, if messaging mechanisms are not available.

The concept of location independence is the basis to implement Client-Server structures in the Home Network. In combination with the concept of the Home Agent Factory load balancing could be realized.

For gaining flexible and extensible applications generally an application logic is needed, which allows easy adding of new functionality. Therefore, it is to be preferred that the application logic is separated from the User Interface and from the middleware (3-Tier-Architecture). The middleware may already abstract from different network technologies and media, but essentially still provides a device-based API. According to the present invention the ensemble of all Home Agents might form the common application logic. Thus, User Interfaces use Home Agents to retrieve information displayed to the user and to initiate operations resulting from user interactions.

Based on the characteristics of Home Agents described in before, the application logic (ensemble of Home Agents) exists exactly once in the Home Network and is used by a multitude of different controllers (User Interfaces).

One of the advantages is saving resources, i.e. processing power, memory, etc., but another, maybe more important advantage is that the synchronization of controllers becomes very easy, since they are realized as different views on the same application logic. One controller automatically notices changes that have been made by another controller.

The application logic's granularity based on the Home Agents allows a controller to scale which parts of the application logic are made visible to users. Thus, the complete application logic, but also a subset could be exposed. E.g. a TV controller visualizes the complete application logic, but a Web-Interface offers just a restricted subset.

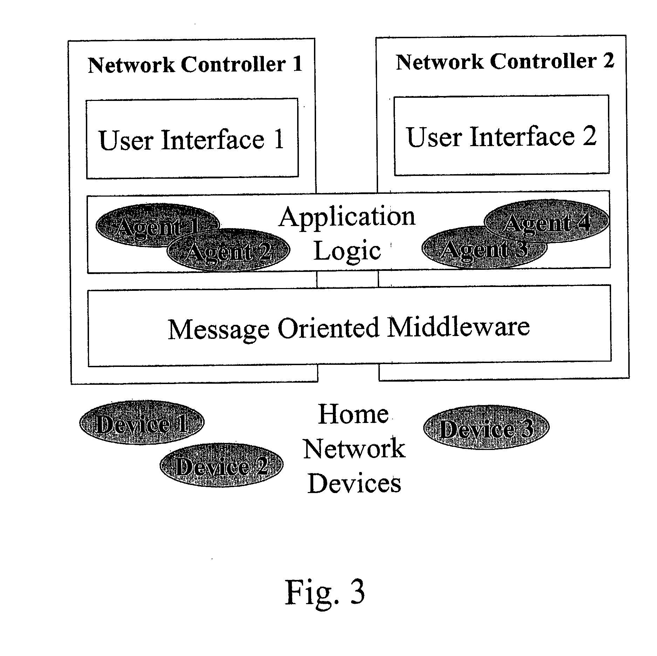

In future Home Networks it is likely that multiple controllers will exist like a second TV, a PDA for home control or a Residential-Gateway that provides access from outside the Home to the Home Network functionality via Internet mechanisms like HTTP, WAP or Java. Consequently different views on one Home Network Application will access the same functionality. Since home devices often suffer from a shortage of resources it makes sense to run the application logic that is in common for all of these controller applications only once in the Home Network or even to distribute it under the connected devices. The different user interfaces will share the underlying application logic. This scenario is shown in Fig. 3.

In the following examples of Home Agents, the service they provide and their API are described. These descriptions will help to understand the concepts and do not represent a complete listing of all existing Home Agents and their API.

The following examples reach from AV related Home Agents like Record, Live TV and Archive to Home Agents that provide software related services like Picture Library and Address Book Agent. The example of the Home Atmosphere Agent shows one type of agent that applies to a domain other than AV devices and shows the universal power of the concept of Home Agents.

All Home Agents have a common behaviour which might be defined in a home agent body, or more general, the common behaviour of a functionality module might be defined in a functionality module body. The Home Agent Factory creates the home agents based on this body. Termination could be automatic when the objective of the Home Agent has been fulfilled or it could be initiated externally by calling the Cancel-method which is shown below.

| Service | Type |
|---|---|
| **HomeAgent::Cancel** | Method |

To terminate a Home Agent a Cancel has to be issued. If this method is invoked a Home Agent terminates all its activities.

The *Home Agent Factory* provides a mechanism to create other home agents. Further, the initiation of the respective home agents is defined.

| Service | Type |
|---|---|
| **HomeAgentFactory::Create** | Method |

The Home Agent Factory creates a new Home Agent of a specified type and returns a unique identifier of this Home Agent. It takes a list of parameters that are needed for the creation of the Home Agent. An application that calls the Home Agent Factory has to know which of the following parameters are required:
- Home Agent Type - the type of the agent that should be created.
- parameters - the parameters that are needed for the creation of the Home Agent.

The *Record Agent* provides the following service: "record a specified TV service from its start time until its end time". Details like the control of the devices involved are hidden.

| Service | Type |
|---|---|
| **Record::GetInfo** | Method |
| **Record::GetState** | Method |
| **Record::Stop** | Method |
| **Record::StateChanged** | Event |

For the creation the following information are needed:
- Service name - the name of the TV service that should be recorded,
- Event name - the name of the event that should be recorded.
- Start time - the time when the recording should start,
- Stop time - the time when the recording should end.

After creation the Record Agent starts fulfilling its objective and runs through the following sequence of operations:
- The Record Agent waits until the start time or a predetermined time before start time (which is needed to set up the following operations before actually stating the recording) is reached. If it is already reached or even elapsed it starts immediately.
- Then it looks for a tuner that provides the specified service.
- Then it looks for a recording device (hard disc or tape recorder).
- The streams between the devices are set up.
- The service is selected on the tuner.
- The recording is started on the recording device and the new track that has been created is named to Event Name parameter.
- The Agent observes the involved devices until the end time is reached.
- Then the recording device is stopped.
- Finally the devices are disconnected.

The operation GetInfo returns the parameters the have been used to start the Record Agent.

The operation GetState returns the status of the Record Agent. The Record Agent in this exemplary embodiment has the following states:
- Bookmarked: It gets into this state after the Start operation is executed and the before the start time has been reached.
- Recording: It gets into this state when after the start time has reached and before the stop time has reached.
- Stopped: When the stop time is reached, the stop or the start method is called then the Agent changes in this state before it destroys itself.
- Failed: If it is not possible to fulfil the operation the Agent will change into this state.

If the recording should be stopped before the end time is reached then the command Stop has to be called. The track that has been created for the recording remains on the disc. When the Record Agent receives a Cancel this track will be deleted.

The event StateChanged is posted to all interested instances (e.g. an UI application) when the Record Agent changes its state.

The *Live TV Agent* contains all functionality that is needed to handle "watching TV". If storing devices like an AV Hard Disc is available in the network the simple objective of watching TV becomes more complex since new functions like Pause, Time-Shift and Instant Replay are added to the basic functionality.

| Service | Type |
|---|---|
| **LiveTV::GetState** | Method |
| **LiveTV::Live** | Method |
| **LiveTV::Pause** | Method |
| **LiveTV::Replay** | Method |
| **LiveTV::SelectService** | Method |
| **LiveTV::Stop** | Method |
| **LiveTV::StateChanged** | Event |
| **LiveTV::Unpause** | Method |

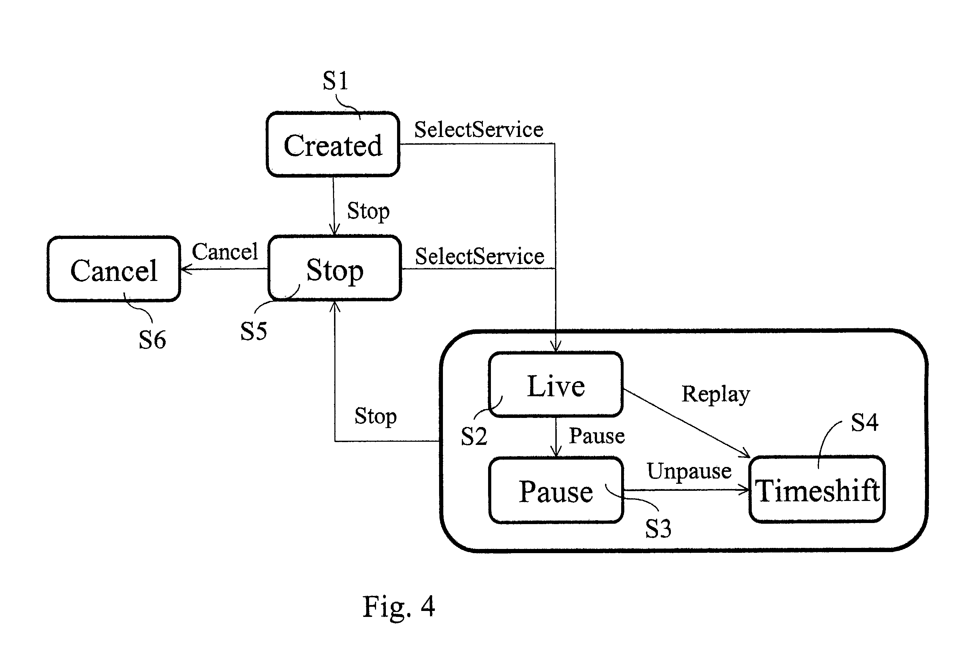

The Live TV Agent life cycle which is after creation in a state Created S1 is shown in Fig. 4.

The operation GetState returns the state of the agent that is one of these values:
- Live, which is shown as state S2 in Fig. 4
- Pause, which is shown as state S3 in Fig. 4
- Stop, which is shown as state S5 in Fig. 4
- Time-shift, which is shown as state S4 in Fig. 4

The state Live S2 displays the live service on TV. It returns from paused S3 or time-shifted S4 state to live TV.

The operation Pause pauses (time-shift) a selected service, i.e. sets the Live TV Agent into the state Pause S3, and stores the content temporally on a storing device (e.g. AV Hard Disc).

The operation Replay replays the last n seconds of the selected service, i.e. sets the Live TV Agent into the state Time-Shift S4. It requires that at least n second of the live stream have previously been stored. It has the following parameter:
- replyTime - the period to replayed.

The operation SelectService selects a service and displays the stream on the TV screen, i.e. sets the Live TV Agent into the state Live S2. Details like the tuner that serves as source device are hidden. If more than one tuner is present in the network the first one that provides the desired service is chosen. It has the following parameter:
- serviceName - the service name of the service that should be selected.

The operation Stop stops all ongoing processes and stops the displaying of the selected service on the TV set, i.e. sets the Live TV Agent into the state Stop S5.

The event StateChanged is posted to all interested instances (e.g. an UI application) when the Live TV Agent changes its state.

If live TV is paused issuing the operation Unpause starts the playback of the temporarily stored stream, i.e. sets the Live TV Agent into the state Time-Shift S4.

In case a cancel is issued, the Live TV Agent terminates living, e.g. from the state Stop S5, which is exemplary shown as a state S6

The Home Agent *Picture Library Agent* provides a service to store and to retrieve pictures and additional information about these pictures. All information about how and where to store pictures are hidden by the Picture Library Agent.

| Service | Type |
|---|---|
| **PictureLibrary::AddPicture** | Method |
| **PictureLibrary::DeletePicture** | Method |
| **PictureLibrary::GetAlbum** | Method |
| **PictureLibrary::GetAllAlbums** | Method |
| **PictureLibrary::GetAllPicture** | Method |
| **PictureLibrary::GetPictureInfo** | Method |
| **PictureLibrary::PictureAdded** | Event |
| **PictureLibrary::PictureDeleted** | Event |

The operation AddPicture adds a new picture to the Picture Library. Its parameters are:
- PictureData - The Picture data.
- Album - The album the picture belongs to
- Title - The title of the picture
- Description - A description or comments of the picture
- Author - The author, photograph or painter of the picture.

The operation DeletePicture removes the picture from the library. Its parameters are:
- Picture Id - an unique identification of the picture (not specified here).

The operation GetAlbum returns a list of all pictures that belong to an album. Its parameters are:
- Picture Id - an unique identification of the picture (not specified in this paper).

The operation GetAllAlbums returns a list of all albums of the Picture Library.

The operation GetAllPicture returns a list of all pictures of the Picture Library.

The operation GetPictureInfo returns information (Album, Title, Description, Author) of a picture. Its parameters are:
- AlbumName - Name of the album.

The event PictureAdded is posted when a picture is added to the Picture Library.

The event PictureDeleted is posted when a picture is removed from the Picture Library.

The Home Agent *Address Book Agent* provides a service for the administration of addresses. Again details about how and where addresses are stored are hidden by the Address Book Agent.

| Service | Type |
|---|---|
| **AddressBook::AddAddress** | Method |
| **AddressBook::DeleteAddress** | Method |
| **AddressBook::FindAddress** | Method |
| **PictureLibrary::** | Event |
| **AddressAdded** | |
| **PictureLibrary::** | Event |
| **AddressDeleted** | |

The operation AddAddress adds a new address to the Address Book. Its parameters are:
- Family Name - the Family name of the address
- First Name - the first name of the address
- Street - the street of the address
- Zip Code - the zip code of the address
- City - the city of the address
- State - the state of the address
- Email - the email address of the address
- Description - a free description.

The operation DeleteAddress removes the address from the address book. Its parameters are:
- Address Id - a unique identification of the address (not specified here).

The operation FindAddress returns a list of addresses that match to search criteria. Those parameters that don't contain an empty value are used for the FindAddress operation. Its parameters are:
- Family Name - the Family name of the address
- First Name - the first name of the address
- Street - the street of the address
- Zip Code - the zip code of the address
- City - the city of the address
- State - the state of the address
- Email - the email address of the address
- Description - a free description.

The operation GetAddressInfo returns information of an address. Its parameters are:
- Address Id - an unique identification of the address (not specified in this paper).

The event AddressAdded is posted when an address is added to the Address Book.

The event PictureDeleted is posted when an address is removed from the Address Book.

The Home Agent *Home Atmosphere Agent* provides a service to control the atmosphere or ambience at home. It belongs to the domain of Home Automation.

Depending on some predefined templates or scenarios the Home Atmosphere Agent might be responsible for controlling devices like heating, lightning, blinds, air-conditioning etc. and to adapt their settings according to a certain type of atmosphere that has been selected by the user.

Example for atmospheres:
- Work: Settings are ideal for working much light not to warm etc.
- TV evening: It's quite warm and the lightning is damped.
- Candle light dinner: Like TV evening atmosphere but a brighter spot above the table.

| Service | Type |
|---|---|
| **HomeAtmosphere::ChangeAtmosphere** | Method |
| **HomeAtmosphere::DeleteAtmosphere** | Event |
| **HomeAtmosphere::GetAtmosphere** | Method |
| **HomeAtmosphere::GetCurrentAtmosphere** | Method |
| **HomeAtmosphere::InstallNewAtmosphere** | Method |
| **HomeAtmosphere::SetCurrentAtmosphere** | Method |

The operation ChangeAtmosphere changes the values of the setting of an atmosphere. Its parameters are:
- Atmosphere Id - an unique identification of the Atmosphere (not specified here).
- Value Set - A set of parameter name - parameter value pairs that represent the new values of the atmosphere.

The operation DeleteAtmosphere deletes a specific atmosphere. Its parameters are:
- Atmosphere Id - a unique identification of the Atmosphere (not specified here).

The operation GetAtmosphere returns the settings of an atmosphere. Its parameters are:
- Atmosphere Id - a unique identification of the Atmosphere (not specified here).
- Value Set - A set of parameter name - parameter value pairs that represent the values of the atmosphere.

The operation GetCurrentAtmosphere returns the currently selected atmosphere.

The operation InstallNewAtmosphere adds a new atmosphere to the set of atmospheres that are available in the home. Its parameters are:
- Value Set - A set of parameter name - parameter value pairs that represent the new values of the atmosphere.

The operation SetCurrentAtmosphere sets the currently selected atmosphere. Its parameters are:
- Atmosphere Id - an unique identification of the Atmosphere (not specified in this paper).

AV/C and HAVi provide the means for device control that could be used in a Home Agent implementation. An IP-based implementation cannot fall back on predefined device control means but could use the IP communication mechanisms. Device control may be solved in a proprietary way. But anyhow it is hidden by the Home Agents' services.

AV/C offers a protocol for controlling AV devices in a simple manner. It does not provide communication means that are required to realize a distributed, location independent implementation of Home Agents. Nevertheless, it could be used for a local single-controller implementation where all Home Agents reside on the same node that provides access to the 1394 network. The Home Agents will completely hide the use of AV/C and ease the realization of the application build using Home Agents.

A possible implementation of an application that uses Home Agent could also be based on HAVi as a Multiple Controller using HAVi. HAVi provides all communication features that are required for the Home Agent concept. Home Agents could be implemented as HAVi Software Elements and could thus make use of basic HAVi system elements like Messaging System, Registry and Event Manager. Since HAVi is a distributed middleware it's possible to implement Home Agents as loosely coupled components.

HAVi provides mechanisms to control devices, so called Functional Component Modules and Device Component Modules. Home Agents may use these device control mechanisms, but as mentioned before the Home Agents completely hide HAVi's device-oriented features like Functional Component Modules and Device Component Modules that represents devices and their functionality.

The Home Agent application logic could also be realized on IP platforms, i.e. IP-based protocols could be used. IP is a widespread protocol with implementations on nearly any platform. An implementation could use any of the protocols that provide appropriate messaging mechanisms as TCP, SOAP, RPC, Corba etc. Unfortunately protocols or middlewares for the control of AV devices are not standardized yet, but are on the way (e.g. UPnP).

Therewith, according to the present invention special requirements are fulfilled for the realization of applications for a Home Network. The user desires applications that support him in solving special objectives. The implementation of such complex objectives according to the present invention is based on another step of abstraction away from device models.

In particular, the concept of functionality modules, such as the exemplary above described Home Agents, realizes such an abstraction. The presence of (home) devices is hidden whenever possible. Instead applications have to interact with (Home Agents) functionality modules.

Generally, an application has a common programming interface to the functionality modules or home agents, which absorbs the details of the possibly several networks and device-control methods needed to perform operations. Thus, the functionality modules or home agents architecture enables the hiding of specific kinds of networks and devices.

In particular the above described Home Agents realize these services in an autonomous way. They are preferably independent and loosely coupled software components and can be created and deleted dynamically. Thus, they meet all requirements on flexibility and extensibility in the development of applications in the Home Entertainment domain.

## Claims

1. Method to control networked devices via a message oriented middleware and a user interface, **characterized by** using instances of one or more functionality modules generated on the basis of a received user input via a user interface which functionality module encapsulates the realization of a certain well defined service corresponding to the user input by way of controlling respectively involved devices via the message oriented middleware.

2. Method according to claim 1, **characterized by**
- generating said functionality module,
- starting and terminating the operation of the functionality module, and
- removing the instance of said functionality module.

3. Method according to claim 1 or 2, **characterized by** dynamically generating said functionality module when the service is needed, when the user request is received, or between these times when enough resources to generate said functionality module are available.

4. Method according to anyone of claims 1 to 3, **characterized by** generating said functionality module independent of location.

5. Method according to anyone of claims 1 to 4, **characterized by** forming an application logic to control the networked devices by combined or parallel processing of a plurality of said functionality modules.

6. Method according to anyone of claims 1 to 5, **characterized in that** said networked devices are audio-video devices.

7. Functionality module generator for generating functionality modules for controlling networked devices via a message oriented middleware and a user interface, **characterized by**
- an interpretation unit deciding which networked devices have to be involved to realize a certain well defined service corresponding to a user input received via said user interface and which actions have to be performed by said devices, and to set a schedule for said actions, and
- an encapsulation unit to encapsulate said schedule for said actions in respect to said involved devices to realize of the certain well defined service corresponding to the user input into a functionality module body so that said actions will get initiated via said message oriented middleware.

8. Functionality module generator according to claim 7, **characterized by**
- an input interface receiving a list of parameters corresponding to said certain well defined service to supply these parameters to the interpretation unit.

9. Functionality module generator according to claim 7 or 8, **characterized by**
- an output interface to supply said functionality module body including said encapsulated schedule for said actions to a control device responsible for said networked devices.

10. Functionality module generator according to anyone of claims 7 to 9, **characterized by**
- an output interface to supply a link to said functionality module body including said encapsulated schedule for said actions to a control device responsible for said networked devices.

11. Functionality module generator according to anyone of claims 7 to 11, **characterized in that** said networked devices are audio-video devices.

12. Functionality module for controlling networked devices via a message oriented middleware and a user interface, **characterized by**
- a functionality module body to encapsulate a schedule for actions capable to realize a certain well defined service corresponding to a user input received via said user interface and which actions have to be performed by said devices so that said actions are initiated via said message oriented middleware.

13. Functionality module according to claim 12, **characterized in that** said functionality module body comprises an functionality to remove the instance of said functionality module after said actions corresponding to said certain well defined service are initiated or performed.

14. Functionality module according to claim 12 or 13, **characterized in that** said networked devices are audio-video devices.

15. Computer program product, comprising computer program means adapted to perform the method steps as defined in anyone of claims 1 to 6, to embody the functionality module generator as defined in anyone of claims 7 to 11, or to embody the functionality module as defined in anyone of claims 12 to 14 when being executed on a computer, digital signal processor or the like.

16. Computer readable record medium, storing thereon a computer program product according to claim 15.
